# EUROPEAN PATENT APPLICATION

(11) **EP 2 918 370 A1**
(43) Date of publication of application: **16.09.2015**
(21) Application number: 14000868.1
(22) Date of filing: 11.03.2014
(51) Int. Cl.: B23K 35/26, B23K 35/28, B23K 35/30, B23K 35/36

(54) **Soldering method for polymer thick film compositions**

(71) Applicant: Heraeus Precious Metals North America Conshohocken LLC, West Conshohocken, PA 19428 (US)
(72) Inventor: Grabey, Steven, Hazleton, Pennsylvania 18201 (US); Groman, Sarah, 19103 Philadelphia (US); Persons, Ryan, Newtown Square, Pennsylvania 19073 (US); Shahbazi, Samson, Roslyn, Pennsylvania 19001 (US)
(74) Representative: Herzog, Fiesser & Partner Patentanwälte PartG mbB

(57) **Abstract**

A method of soldering to a polymer thick film material, comprising the steps of providing a substrate having a polymer thick film layer on at least one surface of the substrate, incorporating a metal preform into the polymer thick film layer such that a surface of the metal preform is exposed, curing the polymer thick film layer to secure the metal preform thereto, and soldering to the exposed surface of the metal preform using a solder material.

## Description

### Technical Field

The invention is directed to methods of soldering to low-temperature polymer thick film materials. These methods are particularly useful for lead-free soldering of low-temperature polymer thick film materials.

### Background

Polymer thick film (PTF) materials are becoming increasingly advantageous for use in various electronic components in a number of applications, including, but not limited to, LED applications, automotive applications, power electronics, antenna or radio frequency applications, and fuel cells. PTF materials can be used to form conductive, insulating, or dielectric layers on various substrates. Because PTF materials typically do not have a glass component (as do conventional thick film materials), they do not require the high firing temperatures (i.e., above 500°C) of convention thick film materials. Most PTF materials may be processed at temperatures between about 120°C and 300°C. As such, the use of PTF materials reduces processing times, and thus manufacturing costs, associated with the manufacture of electronic circuit devices. Further, PTF materials may be used with a variety of substrates which also require such lower processing temperatures.

One concern with PTF materials is that they are inherently difficult to solder to. Most PTF systems that are solderable use lead-based solders which are soldered at relatively low temperatures (e.g., between about 200°C and 270°C) as compared to lead-free solders (e.g., between about 230°C and 300°C). However, lead-free solders are preferred due to environmental concerns. Because of the compositions of PTF materials, their processing temperatures are lower, and thus the use of high-temperature lead-free solders is disadvantageous because leaching of the conductive component (e.g., silver) in the PTF material may occur. When leaching occurs, the remaining PTF material is not solderable and leaves an unusable layer.

Accordingly, there is a need for a method of soldering to a PTF material that reduces or eliminates the occurrence of leaching. Thus, an object of the invention is to provide a method by which a solderable pre-form may be applied to a PTF layer to achieve a solderable contact that will not leach away.

### Summary

The soldering methods of the invention provide for lead-free soldering to PTF materials using a solderable preform material. Such soldering methods eliminate the occurrence of undesirable leaching of the conductive component.

The invention relates to a method of soldering to a polymer thick film material, including the steps of providing a substrate having a polymer thick film layer on at least one surface of the substrate, incorporating a metal preform into the polymer thick film layer such that a surface of the metal preform is exposed, curing the polymer thick film layer to secure the metal preform thereto, and soldering to the exposed surface of the metal preform using a solder material.

Other objects, advantages and salient features of the invention will become apparent from the following detailed description, which, taken in conjunction with the annexed drawings, discloses a preferred embodiment of the invention.

### Brief Description of the Drawings

A more complete appreciation of the invention and many of the attendant advantages thereof will be readily obtained as the same becomes better understood by reference to the following detailed description when considered in connection with the accompanying drawing:

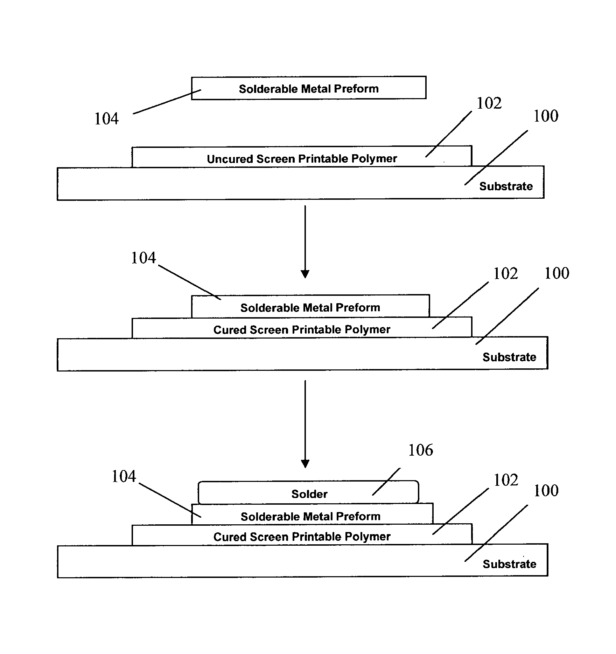

Figure 1 is a diagram showing the steps of a method of soldering to a PTF material.

### Detailed Description

The invention is directed to a method of soldering to a PTF material, preferably using a lead-free solder, while reducing or eliminating unwanted leaching. While not limited to such an application, such soldering methods may be used in the formation of electronic assemblies.

### Soldering Method

The methods of soldering to a PTF material provided herein are useful for lead-free soldering techniques, but may also be used in lead-based soldering as well. Any substrate known to one skilled in the art and suitable for use in any particular electronic application may be used. In one embodiment, the substrate may be formed of glass, ceramic, polymer, metal or any combination thereof. While not limited to such an embodiment, the substrate may be a glass or aluminum substrate. In another embodiment, the substrate may be formed of polyethylene terephthalate. Suitable substrates may be chosen because of temperature restrictions or mechanical properties.

As shown in Figure 1, a PTF material (as discussed more fully herein) is first applied to a surface of the underlying substrate 100 to form a PTF layer 102. The PTF material may be applied via screen printing, stencil printing, tampon printing, dispensing from a nozzle, ink jet printing, spraying, roll to roll processing, such as, for example, gravure, off-set gravure, and flexographic printing, or a combination of at least two thereof. While not limited to such an embodiment, the PTF material may be screen printed on the substrate 100 in any pattern or with any screen suitable for the particular application. The PTF material may be printed in one layer or multiple layers to form a PTF layer 102 with a desired thickness. According to one embodiment, the PTF layer 102 has a thickness of at least 10 microns and preferably no more than about 300 microns, such as at least 25 microns and no more than 150 microns. The PTF material may be printed in multiple passes, whereby each PTF layer is dried before the next PTF layer is printed. The PTF layer acts a connecting layer for the solderable preform, as discussed below.

Before the resulting PTF layer 102 has been dried, a solderable metal preform 104 (as discussed more fully herein) is incorporated (e.g., pressed) into the top surface of the PTF layer 102, as shown in Step A, such that a surface of the preform 104 is exposed to the exterior. The preform 104 may be applied to the PTF layer 102 by hand or it may be applied by an automated machine. Because the PTF layer 102 is in its wet state, the preform 104 adheres to the PTF layer 102 which acts as a glue to hold the preform 104 in place, as shown in Step B. This assembly is then subjected to an elevated temperature (e.g., between about 150°C and 350°C) so as to cure the PTF material and secure the metal preform 104 in place within the PTF layer 102. As set forth more fully herein, the PTF material may have conductive, insulating, or dielectric properties.

As shown in Step C, soldering directly to the metal preform 104 may then be performed. Any solder material known in the art may be used to solder to the metal preform 104, including, but not limited to, tin, copper, silver, bismuth, indium, zinc, antimony, and alloys thereof. According to a preferred embodiment, a lead-free solder material is used to form solder layer 106. As used herein, the term "lead-free" generally relates to a material which contains less than about 0.5 wt% lead (e.g., less than about 0.1 wt% lead). In this way, an electronic component such as, for example, a lead, a wire, a ribbon, a sheet, or any combination thereof, may be soldered to the PTF layer 102 via the metal preform 104 using a solder material. Other electronic components, such as, for example, a chip, a resistor, an LED assembly, a capacitor, an antenna, an electrical automotive power device, a battery, a fuel cell, or any combination thereof may be soldered to the metal preform 104. The adhesive performance of the assembly may be measured to determine whether the solder layer 106 is fully joined to the preform 104. Typically, a pull force of about 5 lbs or greater is preferred.

In an alternative embodiment, any of the electronic components listed above may be incorporated directly into the polymer thick film layer 102 without the use of a metal preform 104. In this approach, the electronic component (not shown) is pressed into the wet polymer thick film layer 102, and the electronic component is cured together with the polymer thick film layer 102 so as to secure the electronic component thereto.

### Preform Materials

The composition of the metal preform may be any metallic material that provides an adequate solderable contact point and sufficient rigidity to remain incorporated within the PTF layer. Examples of suitable preform materials include, but are not limited to, nickel, copper, silver, palladium, platinum, gold, and any combination thereof. In one embodiment, the preform is formed of silver or copper. Preferably, the preform is formed of a metal which does not melt at temperatures below about 700°C.

The shape of the metal preform is not limited by the methods of the invention and may be determined by the type of assembly being prepared or the soldering material being used. For example, the preform may be in the shape of a square or rectangle. In one exemplary application, the length and width of the preform may be at least about 0.5 mm, more preferably at least about 2 mm. At the same time, the length and width of the preform may preferably be no more than about 10 mm, and more preferably no more than about 4 mm. The thickness of the preform may preferably be at least about 25 microns, more preferably at least about 50 microns. At the same time, the thickness of the preform is preferably no more than about 1,000 microns, and preferably no more than about 100 microns.

In one embodiment, the metal preform may be formed of a pre-printed, dried and fired thick film composition, such as, for example, C8710M manufactured by Heraeus Precious Metals North America Conshohocken LLC of West Conshohocken, Pennsylvania. For example, the preform may be prepared as follows. A conductive thick film composition is printed onto a substrate so as to form a thick film layer with a desired thickness. Preferably, the thick film composition is screen printed onto the substrate. After the thick film composition is fired, the formed layer is peeled from the substrate. The conductive thick film layer may be used as the metal preform in any desired shape. While the thick film composition and substrate onto which it is printed are not limited, the thick film must not adhere well to the underlying substrate such that it will not crack or fracture upon peeling from the substrate.

In yet another embodiment, the metal preform may be a metal foil, such as, for example, copper or silver foil. In one exemplary embodiment, copper foil manufactured by McMaster-Carr Supply Company of Elmhurst, Illinois may be used. The foil may be formed into any shape desired for the particular electronic application. Other examples of materials which may be used to form the metal preform include, but are not limited to, sheet metal and conductive tape.

In one embodiment, wire-bondable preforms (having dense solderable surfaces) may also be used according to the same parameters of the solderable preforms set forth above.

### PTF Materials

The methods of the invention may be utilized with any type of PTF material(s). PTF compositions may have conductive, insulating or dielectric properties. Conductive PTF materials must be sufficiently conductive so that they carry electricity between various components of the electrical assembly. Insulating or dielectric PTF compositions are used to isolate the solder layer and connected electrical components away from the underlying substrate. Whether a conductive, insulating or dielectric PTF composition is used depends on the needs of the particular electronic application. For example, where a non-conductive substrate is used, a conductive PTF material will typically be suitable for application directly to the substrate, since shorting between the layers is not a concern. Where the substrate is conductive, however, an insulating or dielectric PTF material is typically printed on the substrate to isolate it from conductive layers (including conductive PTF layers) which may then be applied on top of the insulating or dielectric PTF layer.

PTF materials are typically formed of an organic vehicle which includes a polymer and a solvent. PTF materials may further comprise conductive metallic particles, dielectric particles, insulating particles, or any combinations thereof, as set forth below.

Preferred polymers are those which contribute to the formation of a PTF composition with favorable viscosity and printability. All polymers which are known in the art, and which are considered to be suitable in the context of this invention, may be employed as the polymer in the organic vehicle. Preferably, polymeric resins, monomeric resins, and materials which are a combination of polymers and monomers are used. Suitable polymers can also be copolymers wherein at least two different monomeric units are contained in a single molecule. Preferred polymers are those which carry functional groups in the polymer main chain, those which carry functional groups off of the main chain and those which carry functional groups both within the main chain and off of the main chain. Preferred polymers carrying functional groups in the main chain are for example polyesters, substituted polyesters, polycarbonates, substituted polycarbonates, polymers which carry cyclic groups in the main chain, poly-sugars, substituted poly-sugars, polyurethanes, substituted polyurethanes, polyamides, substituted polyamides, phenolic resins, substituted phenolic resins, copolymers of the monomers of one or more of the preceding polymers, or a combination of at least two thereof. Preferred polymers which carry cyclic groups in the main chain are for example polyvinylbutyral (PVB) and its derivatives and poly-terpineol and its derivatives or mixtures thereof. Preferred poly-sugars are for example cellulose and alkyl derivatives thereof, such as methyl cellulose, ethyl cellulose, hydroxyethyl cellulose, propyl cellulose, hydroxypropyl cellulose, butyl cellulose and their derivatives and mixtures of at least two thereof. Other preferred polymers are cellulose ester resins, e.g., cellulose acetate propionate, cellulose acetate butyrate, and mixtures thereof. Preferred polymers which carry functional groups off of the main polymer chain are those which carry amide groups, those which carry acid and/or ester groups, often called acrylic resins, or polymers which carry a combination of the aforementioned functional groups, or a combination thereof. Preferred polymers which carry an amide group off of the main chain include, for example, polyvinyl pyrrolidone (PVP) and its derivatives. Preferred polymers which carry acid and/or ester groups off of the main chain include, for example, polyacrylic acid and its derivatives, polymethacrylate (PMA) and its derivatives or polymethylmethacrylate (PMMA) and its derivatives, or a mixture thereof. Preferred monomeric resins include, but are not limited to, ethylene glycol based monomers, terpineol resins or rosin derivatives, or a mixture thereof. Preferred monomeric resins based on ethylene glycol are those with ether groups, ester groups or those with an ether group and an ester group, preferred ether groups being methyl, ethyl, propyl, butyl, pentyl, hexyl and higher alkyl ethers, the preferred ester group being acetate and its alkyl derivatives, preferably ethylene glycol monobutylether monoacetate or a mixture thereof. In one embodiment, epoxy or silicone may be used. In a preferred embodiment, polyimide resins are used.

The polymer may be present in an amount of at least about 1 wt%, preferably at least about 2 wt%, based upon 100% total weight of the PTF composition. At the same time, the polymer may be present in an amount of no more than about 50 wt%, preferably no more than about 40 wt%, and most preferably no more than about 30 wt%, based upon 100% total weight of the PTF composition.

Any solvent known in the art may be used. Preferred solvents include, but are not limited to, polar or non-polar, protic or aprotic, aromatic or non-aromatic compounds, and may be mono-alcohols, di-alcohols, poly-alcohols, mono-esters, di-esters, poly-esters, monoethers, di-ethers, poly-ethers, solvents which comprise at least one or more of these categories of functional groups, optionally comprising other categories of functional groups, preferably cyclic groups, aromatic groups, unsaturated bonds, alcohol groups with one or more O atoms replaced by heteroatoms (such as N atoms), ether groups with one or more O atoms replaced by heteroatoms (such as N atoms), esters groups with one or more O atoms replaced by heteroatoms (such as N atoms), and mixtures of two or more of the aforementioned solvents. Preferred esters in this context include, but are not limited to, di-alkyl esters of adipic acid, preferred alkyl constituents including methyl, ethyl, propyl, butyl, pentyl, hexyl and higher alkyl groups or combinations of two different such alkyl groups, preferably dimethyladipate, and mixtures of two or more adipate esters. Preferred ethers in this context include, but are not limited to, diethers, such as dialkyl ethers of ethylene glycol and mixtures of two diethers. The alkyl constituents in the dialkyl ethers of ethylene can be, for example, methyl, ethyl, propyl, butyl, pentyl, hexyl and higher alkyl groups or combinations of two different such alkyl groups. Preferred alcohols in this context include, but are not limited to, primary, secondary and tertiary alcohols, preferably tertiary alcohols, terpineol and its derivatives being preferred, or a mixture of two or more alcohols. Preferred solvents which combine more than one functional group include, but are not limited to, (i) 2,2,4-trimethyl-1,3-pentanediol monoisobutyrate, often called texanol, and its derivatives, (ii) 2-(2-ethoxyethoxy)ethanol, also known as carbitol, its alkyl derivatives, preferably methyl, ethyl, propyl, butyl, pentyl, and hexyl carbitol, preferably hexyl carbitol or butyl carbitol, and acetate derivatives thereof, preferably butyl carbitol acetate, or (iii) mixtures of at least two of the aforementioned.

In one embodiment, the solvent is at least about 5 wt% of the PTF composition, preferably at least about 10 wt%, and most preferably at least about 15 wt%, based upon 100% total weight of the PTF composition. At the same time, the solvent is preferably no more than about 50 wt% of the PTF composition, preferably no more than about 40 wt%, and most preferably no more than about 30 wt%, based upon 100% total weight of the PTF composition. The solvent may be incorporated with the polymer(s), or the solvent may be added directly to the PTF composition.

According to another embodiment, the organic vehicle may further comprise surfactant(s) and/or thixotropic agent(s). These components contribute to the improved viscosity and printability of the PTF composition. All surfactants which are known in the art, and which are considered to be suitable in the context of this invention, may be employed as the surfactant in the organic vehicle. Preferred surfactants in the context of the invention are those based on linear chains, branched chains, aromatic chains, fluorinated chains, siloxane chains, polyether chains and combinations thereof. Preferred surfactants are single chained, double chained or poly chained. Suitable surfactants include, but are not limited to, nonionic, anionic, cationic, amphiphilic, or zwitterionic compounds. Preferred surfactants are polymeric or monomeric or a mixture thereof. Preferred surfactants according to the invention can have pigment affinic groups, preferably hydroxyfunctional carboxylic acid esters with pigment affinic groups (e.g., DISPERBYK®-108, manufactured by BYK USA, Inc.), DISPERBYK®-110 (manufactured by BYK USA, Inc.), acrylate copolymers with pigment affinic groups (e.g., DISPERBYK®-116, manufactured by BYK USA, Inc.), modified polyethers with pigment affinic groups (e.g., TEGO® DISPERS 655, manufactured by Evonik Tego Chemie GmbH), or other surfactants with groups of high pigment affinity (e.g., TEGO® DISPERS 662 C, manufactured by Evonik Tego Chemie GmbH). Other preferred polymers according to the invention not in the above list are polyethylene glycol and its derivatives, and alkyl carboxylic acids and their derivatives or salts, or mixtures thereof. The preferred polyethylene glycol derivative is poly(ethylene glycol) acetic acid. Preferred alkyl carboxylic acids are those with fully saturated and those with singly or poly unsaturated alkyl chains or mixtures thereof. Preferred carboxylic acids with saturated alkyl chains are those with alkyl chain lengths in the range from about 8 to about 20 carbon atoms, preferably C₉H₁₉COOH (capric acid), C₁₁H₂₃COOH (lauric acid), C₁₃H₂₇COOH (myristic acid) C₁₅H₃₁COOH (palmitic acid), C₁₇H₃₅COOH (stearic acid) or mixtures thereof. Preferred carboxylic acids with unsaturated alkyl chains are C₁₈H₃₄O₂ (oleic acid) and C₁₈H₃₂O₂ (linoleic acid). A preferred monomeric surfactant is benzotriazole and its derivatives.

If a surfactant is present in the organic vehicle, it is present in an amount of at least about 0.01 wt%, based upon 100% total weight of the organic vehicle. At the same time, the surfactant is preferably present in an amount of no more than about 10 wt%, preferably no more than about 8 wt%, and most preferably no more than about 6 wt%.

Thixotropic agents prevent the PTF material from excessive spreading when deposited onto a substrate surface, which is helpful in achieving desired film thickness. Any thixotropic agent known in the art that is compatible with the solvent and polymer system may be used. Preferred thixotropic agents in this context are carboxylic acid derivatives, preferably fatty acid derivatives or combinations thereof. Preferred fatty acid derivatives include saturated and unsaturated fatty acids, such as C₉H₁₉COOH (capric acid), C₁₁H₂₃COOH (lauric acid), C₁₃H₂₇COOH (myristic acid) C₁₅H₃₁COOH (palmitic acid), C₁₇H₃₅COOH (stearic acid) C₁₈H₃₄O₂ (oleic acid), C₁₈H₃₂O₂ (linoleic acid) or combinations thereof. A preferred combination comprising fatty acids in this context is castor oil. Additional preferred thixotropic agents include, but are not limited to, Thixatrol ® ST, Thixatrol ® PLUS, and Thixatrol ® MAX (manufactured by Elementis Specialties, Inc.). These components may be incorporated with the solvent and/or solvent/polymer mixture, or they may be added directly into the PTF composition. The thixotropic agent is preferably at least about 0.1 wt% of the PTF composition, and preferably at least about 0.5 wt%, based upon 100% total weight of the PTF composition. At the same time, the thixotropic agent is preferably no more than about 2 wt% of the PTF composition, and preferably no more than about 1.5 wt%, based upon 100% total weight of the PTF composition.

The organic vehicle may also comprise one or more additives. Preferred additives in the vehicle are those which are distinct from the aforementioned vehicle components and which contribute to favorable viscosity and printability of the PTF composition. Preferred additives according to the invention are viscosity regulators, stabilizing agents, inorganic additives, thickeners, emulsifiers, dispersants, plasticizers, or pH regulators. In a preferred embodiment, the PTF composition includes reactants, such as diluent and/or hardeners.

In one embodiment, the PTF composition has a viscosity which allows it to be able to form a layer having sufficient thickness to secure a metal preform thereto. According to the invention, viscosity is measured using a Brookfield^{®} DV-III Ultra HBT viscometer. Specifically, the same is measured in a 6R utility cup using a SC4-14 spindle, and the measurement is taken after one minute at 10 RPM. According to one embodiment, the PTF composition may have a viscosity of at least about 30 kcPs and no more than about 250 kcPs.

### Conductive PTF Materials

In addition to the organic vehicle, conductive PTF materials include a conductive phase as well. The conductive phase may comprise any conductive particles known to one skilled in the art, such as conductive metallic particles, for example, silver, aluminum, copper, gold, platinum, or any combinations thereof. In one embodiment, the conductive metallic particles are provided in the form of silver powder or silver flake. According to one embodiment, the conductive PTF composition comprises at least about 60 wt% conductive particles, preferably at least about 70 wt%, more preferably at least about 80 wt%, and most preferably at least about 85 wt%, based upon 100% total weight of the paste. At the same time, the PTF composition preferably comprises no more than about 95 wt% conductive particles, and preferably no more than about 90 wt%, based upon 100% total weight of the PTF composition.

### Insulating or Dielectric PTF Materials

Insulating or dielectric PTF materials typically comprise the organic vehicle discussed above. In addition, such PTF materials may include other organic polymers and/or insulating or dielectric particles such as dyes, pigments, or fillers. Insulating polymers may be added to provide the PTF composition with the desired electrical insulation. Suitable insulating polymer materials used for PTF materials are known in the art.

The insulating or dielectric PTF materials may comprise additives and/or dopants. Such additives and/or dopants may include, but are not limited to, dielectric particles, insulating particles, dyes, pigments, or fillers, such as, for example, oxides or compounds of silicon, boron, aluminum, bismuth, lithium, sodium, magnesium, zinc, titanium, zirconium, or phosphorous. Specifically, the PTF composition may comprise at least about 0.1 wt % dielectric and/or insulating particles, based upon 100% total weight of the PTF composition. At the same time, the PTF composition may comprise no more than about 90 wt% dielectric and/or insulating particles, preferably no more than about 70 wt%, and most preferably no more than about 60 wt%, based upon 100% total weight of the PTF composition.

### Forming PTF Compositions

To form the PTF composition, the components of the organic vehicle are combined using any method known in the art for preparing a PTF composition. The method preferably results in a homogenously dispersed composition. With respect to conductive PTF materials, the conductive component is added to the organic vehicle and mixed according to any known method in the art, such as, for example, with a mixer, and then passed through a three roll mill, for example, to make a dispersed uniform composition.

The PTF materials may be applied to a substrate using any known application methods, such as, for example, screen printing, stencil printing, tampon printing, dispensing from a nozzle, ink jet printing, spraying, roll to roll processing, such as, for example, gravure, off-set gravure, flexographic printing, and any combination thereof.

The invention will now be described in conjunction with the following, nonlimiting examples.

### Example 1

In a first example, two different types of preforms were tested. A first preform was prepared by coating a thick film silver composition (C8710M, manufactured by Heraeus Precious Metals North America Conshohocken LLC) onto a substrate to form a uniform thick film layer. Specifically, the thick film silver composition was screen printed using a 280 mesh screen of a 2x2 ground plane pattern with 0.2 - 0.7 mil emulsion thickness of the screen at a speed of about 2.76 inches per second. Next, the silver thick film composition was fired at about 850°C to form a preform, which was then peeled from the substrate. The resulting silver preform was then cut into about 200 mil squares. As the second type of preform, commercially available copper foil was cut into similarly-sized squares.

At the same time, four glass substrates and four aluminum substrates were each printed with a low-temperature dielectric PTF material using a 280 mesh screen of a 2 x 2 ground plane pattern. One layer of the PTF material was screen printed and dried for about 10 minutes at a temperature of about 150°C. Next, a second layer of PTF material was printed directly on top of the first layer of PTF material. While in the wet state, five squares of the silver preform and five squares of the copper preform were pushed into the PTF layer on two of the glass substrates and two of the aluminum substrates. No preform was in direct physical contact with another preform. This layered substrate was then heated to a temperature of about 150°C for about one hour so as to cure the PTF layer and secure the preforms thereto.

Once the PTF layer was cured, a solder-plated copper 60/40 tin wire was then soldered to the preforms. With respect to the glass substrates, a wire was soldered to the silver preform via hand soldering using a lead-free tin/silver/copper soldering material (SAC305, manufactured by AIM Metals & Alloys LP). With respect to the aluminum substrates, the substrate was heated over solder for about five seconds to a temperature of about 255°C (so as to allow the substrate to reach the same temperature as the molten solder) and then dipped into the SAC305 soldering material for about three seconds. The dipping of the substrate into the soldering material allows a coating of solder to be applied to the preform, thereby improving soldering performance. Leads were then soldered to the silver preform via hand soldering using solder material SAC305.

Each copper and silver preform then underwent adhesion testing using a Zwick Z2.5 pull tester machine. To prepare the test specimens, the test leads (formed of solder plated copper 60/40 tin) are first ultrasonically cleaned. The test pads are dipped in 615 RMA Flux, and then dipped in SAC305 solder (available from AIM Solder of Montreal, Quebec) at 255°C for three seconds to fully coat the pad. While holding the test lead perpendicular to the pad, solder wire is added and the solder is re-melted on the pre-tinned pad using a solder iron at a temperature of about 255°C. While holding the test lead, the solder iron is removed, and once the solder re-solidifies, the lead is released. The solder joints are then cleaned using an appropriate solvent, preferably soaking the parts in the solvent for several minutes before gently cleaning joints with a soft brush. The parts are then left to rest for about 24 hours before performing the pull force test.

To perform the pull force test, each lead is trimmed to about two inches and the test part is then clamped into the grip of the Zwick testing machine. Each lead is pulled perpendicularly to the substrate until it separates from the test pad. The arm movement is set at a constant speed of 400 mm/minute, with a grip separation of about 1.5 inches. The force at which the lead separates from the test pad is provided as the pull force (1bf). Typically, a pull force of about 2 lbf or greater is preferred.

The average values for adhesive strength (in pounds) and standard deviation for each type of preform were calculated. The results of the adhesion testing are set forth in Table 1 below. As it can be seen, the silver and copper preforms adhered well to the PTF layer on both the aluminum and glass substrates, exceeding industry standards with average adhesions of above 5 lbs.

**Table 1. Adhesive Strength of Silver and Copper Preforms in Dielectric PTF Layer on Glass and Aluminum Substrates**

| **Substrate** | **Preform** | **Average Adhesion (lbs)** | **Stand. Deviation (lbs)** |
|---|---|---|---|
| Aluminum Substrate | Silver | 14.4 | 7.27 |
| | Copper | 14.1 | 7.12 |
| Glass Substrate | Silver | 5.56 | 6.27 |
| | Copper | 14.0 | 6.15 |

### Example 2

In a second example, silver and copper preforms as set forth in Example 1 were applied to a conductive PTF material on aluminum substrates. In a first step, a layer of dielectric LTD5301 PTF (as used in Example 1) was printed onto an aluminum substrate using a 280 mesh screen of a 2x2 ground plane pattern. The substrate was then dried for about 10 minutes at 150°C. A second layer of dielectric LTD5301 PTF was then printed on top of the first layer of LTD5301 and was cured for about one hour at 150°C. In a third printing step, a layer of conductive LTC3301 PTF (available from Heraeus Precious Metals North American Conshohocken LLC of West Conshohocken, Pennsylvania) was printed on top of the second layer of dielectric LTD5301 PTF using a 280 mesh screen. While wet, five squares of silver preform were pressed into the conductive PTF layer on two of the aluminum substrates, and five squares of copper preform were pressed into the conductive PTF layer on the other two aluminum substrates. The substrates were then cured for about one hour at about 150°C.

Wires were then soldered to each of the squares of silver preform and copper preform and adhesion testing was preformed according to the parameters set forth in Example 1. The adhesive performance is set forth in Table 2 below. As shown, the silver and copper preforms adhered well to the PTF layer on the aluminum substrate.

**Table 2. Adhesive Strength of Silver and Copper Preforms in Conductive PTF Layer on Aluminum Substrates**

| **Preform** | **Average Adhesion (lbs)** | **Stand. Deviation (lbs)** |
|---|---|---|
| Silver | 11.4 | 2.98 |
| Copper | 11.3 | 3.69 |

### Example 3

In a third example, silver and copper preforms as set forth in Example 1 were applied to a conductive PTF material on a glass substrate. In a first step, a layer of conductive LTC3301 PTF was printed onto a glass substrate using a 280 mesh screen with the standard printing pattern as set forth in Example 2. While in the wet state, five squares of silver preform were pushed into the conductive PTF layer on two glass substrates, and five squares of copper preform were pushed into the conductive PTF layer on two other glass substrates. The substrates were then cured for about one hour at 150°C.

Wires were then soldered to each of the squares of silver preform and copper preform and adhesion testing was performed according to the parameters set forth in Example 1. The adhesive performance is set forth in Table 3 below. As shown, the silver and copper preforms adhered well to the PTF layer on the glass substrate.

**Table 3. Adhesive Strength of Silver and Copper Preforms in Conductive PTF Layer on Glass Substrates**

| **Preform** | **Average Adhesion (lbs)** | **Stand. Deviation (lbs)** |
|---|---|---|
| Silver | 6.54 | 3.54 |
| Copper | 5.12 | 1.20 |

These and other advantages of the invention will be apparent to those skilled in the art from the foregoing specification. Accordingly, it will be recognized by those skilled in the art that changes or modifications may be made to the above described embodiments without departing from the broad inventive concepts of the invention. Specific dimensions of any particular embodiment are described for illustration purposes only. It should therefore be understood that this invention is not limited to the particular embodiments described herein, but is intended to include all changes and modifications that are within the scope and spirit of the invention.

### Further embodiments

I A method of soldering to a polymer thick film material, comprising the steps of:
   providing a substrate having a polymer thick film layer on at least one surface of the substrate;
   incorporating a metal preform into the polymer thick film layer such that a surface of the metal preform is exposed;
   curing the polymer thick film layer to secure the metal preform thereto; and
   soldering to the exposed surface of the metal preform using a solder material.
II The method according to embodiment I, wherein the polymer thick film layer is formed by screen printing, stencil printing, tampon printing, dispensing from a nozzle, inkjet printing, spraying, roll to roll processing, flexographic printing, or a combination of at least two thereof, a polymer thick film composition onto at least one surface of the substrate.
III The method according to embodiments I or II, wherein the polymer thick film layer has a thickness of at least 10 microns, preferably at least 25 microns, and no more than 300 microns, preferably no more than 150 microns.
IV The method according to any of the preceding embodiments, wherein the polymer thick film composition has a viscosity of at least 30 kcPs and no more than 250 kcPs.
V The method according to any of the preceding embodiments, wherein the polymer thick film composition comprises a polymer, a solvent and at least one selected from the group of conductive particles, dielectric particles, and insulating particles, or any combination thereof.
VI The method according to any of the preceding embodiments, wherein the polymer thick film composition comprises:
   at least about 1 wt% polymer, preferably at least about 2 wt%, and no more than about 50 wt%, preferably no more than about 40 wt%, and most preferably no more than about 30 wt%, based upon 100% total weight of the PTF composition.
VII The method according to embodiment VI, wherein the polymer thick film composition further comprises at least about 60 wt% conductive particles, preferably at least about 70 wt%, more preferably at least about 80 wt%, and most preferably at least about 85 wt%, and no more than about 95 wt%, preferably no more than about 90 wt%, based upon 100% total weight of the composition.
VIII The method according to embodiment VI, wherein the polymer thick film composition further comprises at least about 0.1 wt % dielectric and/or insulating particles, and no more than about 90 wt%, preferably no more than about 70 wt%, and most preferably no more than about 60 wt%, based upon 100% total weight of the composition.
IX The method according to any of the preceding embodiments, wherein the substrate is formed of glass, ceramic, polymer, metal or any combination thereof.
X The method according to any of the preceding embodiments, wherein the metal preform is a metal foil.
XI The method according to any of the preceding embodiments, wherein the metal preform is formed from a conductive thick film composition.
XII The method according to any of the preceding embodiments, wherein the metal preform is formed of silver or copper.
XIII The method according to any of the preceding embodiments, wherein the solder material is lead-free.
XIV The method according to any of the preceding embodiments, wherein the solder material comprises tin, copper, silver, bismuth indium, zinc, antimony, or alloys thereof.
XV An article comprising:
   a substrate having at least one surface;
   a connecting layer applied to at least one surface of the substrate; and
   a solderable preform incorporated into the connecting layer.
XVI The article according to embodiment XV, wherein the connecting layer is a polymer thick film layer, and the solderable preform is a metal preform incorporated into the polymer thick film layer such that a surface of the metal preform is exposed.
XVII The article according to embodiments XV or XVI, wherein the connecting layer comprises a polymer and at least one selected from the group consisting of conductive particles, dielectric particles, insulating particles, or any combination thereof.
XVIII The article according to any of embodiments XV-XVII, wherein the connecting layer comprises at least about 1 wt% polymer, preferably at least about 2 wt%, and no more than about 50 wt%, preferably no more than about 40 wt%, and most preferably no more than about 30 wt%, based upon 100% total weight of the connecting layer.
XIX The article according to embodiment XIII, further comprising a lead, wire, ribbon, or sheet soldered to the exposed surface of the metal preform.
XX A cured article formed by a process including the steps of:
   providing a substrate having a polymer thick film layer on at least one surface of the substrate;
   incorporating a metal preform into the polymer thick film layer such that a surface of the metal preform is exposed; and
   curing the polymer thick film layer to secure the metal preform thereto.
XXI A soldered electronic component formed by a process including the steps of:
   providing a substrate having a polymer thick film layer on at least one surface of the substrate;
   incorporating a metal preform into the polymer thick film layer such that a surface of the metal preform is exposed;
   curing the polymer thick film layer to secure the metal preform thereto; and
   soldering a connector selected from the group consisting of a lead, wire, ribbon, sheet, or a combination thereof to the exposed surface of the metal preform using a solder material.
XXII A connected electronic component formed by a process including the steps of:
   providing a substrate having a polymer thick film layer on at least one surface of the substrate;
   incorporating an electronic component into the polymer thick film layer such that a surface of the electronic component is exposed; and
   curing the polymer thick film layer to secure the electronic component thereto.
XXIII The connected electronic component according to embodiment XVII, wherein the electronic component is selected from the group consisting of a chip, a resistor, an LED, a capacitor, or any combination thereof.
XIV The connected electronic component according to embodiments XVII or XVIII, wherein the electronic component is selected from the group consisting of an antenna, an electrical automotive power device, a battery, a fuel cell, or a combination thereof.

## Claims

1. A method of soldering to a polymer thick film material, comprising the steps of:
providing a substrate having a polymer thick film layer on at least one surface of the substrate;
incorporating a metal preform into the polymer thick film layer such that a surface of the metal preform is exposed;
curing the polymer thick film layer to secure the metal preform thereto; and
soldering to the exposed surface of the metal preform using a solder material.

2. The method according to claim 1, wherein the polymer thick film layer is formed by screen printing, stencil printing, tampon printing, dispensing from a nozzle, ink jet printing, spraying, roll to roll processing, flexographic printing, or a combination of at least two thereof, a polymer thick film composition onto at least one surface of the substrate.

3. The method according to any of the preceding claims, wherein the polymer thick film composition comprises a polymer, a solvent and at least one selected from the group of conductive particles, dielectric particles, and insulating particles, or any combination thereof.

4. The method according to any of the preceding claims, wherein the substrate is formed of glass, ceramic, polymer, metal or any combination thereof.

5. The method according to any of the preceding claims, wherein the metal preform is a metal foil.

6. The method according to any of the preceding claims, wherein the metal preform is formed from a conductive thick film composition.

7. The method according to any of the preceding claims, wherein the metal preform is formed of silver or copper.

8. The method according to any of the preceding claims, wherein the solder material is lead-free.

9. The method according to any of the preceding claims, wherein the solder material comprises tin, copper, silver, bismuth indium, zinc, antimony, or alloys thereof.

10. An article comprising:
a substrate having at least one surface;
a connecting layer applied to at least one surface of the substrate; and
a solderable preform incorporated into the connecting layer.

11. The article according to claim 10, wherein the connecting layer is a polymer thick film layer, and the solderable preform is a metal preform incorporated into the polymer thick film layer such that a surface of the metal preform is exposed.

12. The article according to claims 10 or 11, wherein the connecting layer comprises a polymer and at least one selected from the group consisting of conductive particles, dielectric particles, insulating particles, or any combination thereof.

13. A cured article formed by a process including the steps of:
providing a substrate having a polymer thick film layer on at least one surface of the substrate;
incorporating a metal preform into the polymer thick film layer such that a surface of the metal preform is exposed; and
curing the polymer thick film layer to secure the metal preform thereto.

14. A soldered electronic component formed by a process including the steps of:
providing a substrate having a polymer thick film layer on at least one surface of the substrate;
incorporating a metal preform into the polymer thick film layer such that a surface of the metal preform is exposed;
curing the polymer thick film layer to secure the metal preform thereto; and
soldering a connector selected from the group consisting of a lead, wire, ribbon, sheet, or a combination thereof to the exposed surface of the metal preform using a solder material.

15. A connected electronic component formed by a process including the steps of
providing a substrate having a polymer thick film layer on at least one surface of the substrate;
incorporating an electronic component into the polymer thick film layer such that a surface of the electronic component is exposed; and
curing the polymer thick film layer to secure the electronic component thereto.
